# EUROPÄISCHE PATENTSCHRIFT

(11) **EP 2 189 248 B1**
(45) Veröffentlichungstag und Bekanntmachung des Hinweises auf die Patenterteilung: **20.07.2011**
(21) Anmeldenummer: 09172551.5
(22) Anmeldetag: 08.10.2009
(51) Int. Cl.: B25C 1/06, B25C 1/08, H01M 2/10, B25C 1/04

(54) **Akkupack und Handwerkzeugmaschine**
Battery pack and hand tool
Ensemble de batterie et machine-outil

(30) Priorität: 19.11.2008 DE 102008043851
(43) Veröffentlichungstag der Anmeldung: 26.05.2010
(73) Patentinhaber: HILTI Aktiengesellschaft, 9494 Schaan (LI)
(72) Erfinder: Schiestl, Ulrich, 6845 Hohenems (AT)

(56) Entgegenhaltungen:
- EP-A2- 1 470 896
- WO-A2-2007/048006
- DE-A1- 19 629 762
- US-A1- 2005 077 878

## Beschreibung

Die vorliegende Erfindung betrifft einen Akkupack, der im Oberbegriff von Patentanspruch 1 genannten Art. Derartige Akkupacks werden u. a. in elektrisch betriebenen Handwerkzeugmaschinen, wie z. B. in elektrisch betriebenen Eintreibgeräten, verwendet. Die Erfindung betrifft ferner eine Handwerkzeugmaschine, der im Oberbegriff des nebengeordneten Patentanspruchs 4 genannten Art. Derartige Handwerkzeugmaschinen beziehen die benötigte elektrische Betriebsenergie zumindest zeitweise aus einem Akkupack.

Ein gattungsgemässer Akkupack ist z. B. aus der DE 102 12 750 A1 bekannt, der mehrere in einem Gehäuse angeordnete Zellen aufweist. An einer Seite des Gehäuses sind Kontaktelemente angeordnet, über die eine elektrische Verbindung zwischen dem Akkupack und dem elektrischen Antrieb einer Handwerkzeugmaschine herstellbar ist. Am Gehäuse angeordnete Rastelemente dienen der Fixierung des Akkupacks am Gehäuse einer Handwerkzeugmaschine.

Aus der DE 196 29 762 A1 ist eine als elektrisch betriebenes Eintreibgerät ausgebildete Handwerkzeugmaschine bekannt, die einen Zwischenspeicher für kinetische Energie in Form einer Gasfeder aufweist. Die in der Gasfeder gespeicherte Energie wird dazu genutzt um einen Eintreibstössel des Eintreibgerätes schlagartig zu beschleunigen. Zur Aufladung der Gasfeder wird ein elektrischer Antrieb verwendet, der die Gasfeder vor einem Eintreibvorgang spannt. Um einen durch eine nicht zu vermeidende Leckage vorhandenen Verlust von Gas in der Gasfeder immer wieder auszugleichen zu können, ist in dem Eintreibgerät ein Gasreservoir angeordnet. Damit das Gasreservoir genügend Gas für die Lebensdauer des Eintreibgerätes enthält, muss die Gaspatrone einerseits relativ gross sein und andererseits muss das Gas in dem Reservoir entweder verflüssigt oder in einem überkritischen Zustand sein. An dem Eintreibgerät ist ferner noch eine Aufnahme für einen Akkupack angeordnet, der die elektrische Energie für den elektrischen Antrieb liefert.

Von Nachteil bei diesem Eintreibgerät ist zum einen, dass es sehr gross baut und zum anderen, dass ein Austausch des Gasreservoirs, wenn dieses vor dem Ende der Lebensdauer des Eintreibgerätes entleert ist, sehr aufwändig und teuer ist.

Die Aufgabe der vorliegenden Erfindung liegt zum einen darin, einen Akkupack der vorgenannten Art zu entwickeln, der optimal angepasst ist für den Einsatz mit Handwerkzeugmaschinen, die sowohl elektrische Betriebsenergie als auch ein unter Druck stehendes Gas für den Betrieb benötigen. Eine weitere Aufgabe liegt in der Realisation einer Handwerkzeugmaschine die für den Betrieb mit einem erfindungsgemässen Akkupack angepasst ist.

Die Aufgabe wird bei einem Akkupack erfindungsgemäss durch die in Anspruch 1 genannten Massnahmen gelöst. Demnach weist der Akkupack ein innerhalb das Gehäuses angeordnetes Gasreservoir und einen mit dem Gasreservoir über eine Druckleitung verbundenen Ausgabeport für Gas auf.

Durch diese Massnahme kann von dem Akkupack nicht nur elektrische Energie sondern auch unter Druck stehendes Gas (wie z. B. Druckluft) zur Verfügung gestellt werden. Das vom Akkupack bereitgestellte unter Druck stehende Gas kann in einer Handwerkzeugmaschine, wie einem elektrisch betriebenen Eintreibgerät mit Gasfeder, z. B. dazu genutzt werden, um einen leckagebedingten Gasverlust der Gasfeder auszugleichen. Das Gasreservoir im Akkupack kann relativ klein ausgeführt sein, da es mit jedem Akkuladevorgang ebenfalls wieder geladen werden kann. So kann ein Akkuladegerät derart ausgebildet sein, dass es neben einer elektrischen Kontaktstelle zur Ladung der Zellen des Akkupacks auch eine Anschlussstelle für den Ausgabeport aufweist, um das Gasreservoir parallel zum elektrischen Ladevorgang wieder mit Gas zu befüllen. Das Gasreservoir ist innerhalb des Gehäuses angeordnet, so dass sich der Akkupack optisch nicht von einem herkömmlichen Akkupack unterscheidet und der Gasspeicher gegen einen Zutritt von Schmutz oder Feuchtigkeit oder Schlageinwirkung geschützt ist.

Von Vorteil ist es ferner, wenn die Kontaktelemente und der Ausgabeport an einem gemeinsamen Anschlussport angeordnet sind, so dass beim Anbringen des Akkupacks an ein Gerät, wie eine Handwerkzeugmaschine oder ein Ladegerät, die Kontaktelemente und der Ausgabeport gleichzeitig mit geräteseitigen Gegenkontakten und Anschlussmitteln verbunden werden.

Günstig ist es auch, wenn eine Elektronik vorgesehen ist, die einen Temperatursensor aufweist, so dass zum einen eine Temperaturüberwachung der Akkuzellen erfolgen kann und zum anderen indirekt auch eine Überwachung des Gasreservoirs (z. B. im Falle starker Abkühlung). Ausserdem könnte die Elektronik noch mit einem Drucksensor zur Überwachung des Drucks im Druckreservoir oder mit einem als Sicherheitsventil fungierenden Überdruckventil verbunden sein.

Bezüglich einer Handwerkzeugmaschine wird die gestellte Aufgabe durch die Merkmale des Anspruchs 4 gelöst. An der Aufnahme für den Akkupack ist ein Anschlussmittel für einen Ausgabeport eines Gasreservoirs des Akkupacks angeordnet, wobei das Anschlussmittel mit einer Gasfeder pneumatisch verbunden ist. Auf diese Weise kann sowohl eine elektrische als auch eine pneumatische Verbindung zwischen Handwerkzeugmaschine und Akkupack erfolgen.

Vorteilhaft sind die elektrischen Gegenkontaktelemente und das Anschlussmittel an einem gemeinsamen Gegenanschlussport angeordnet, so dass beim Anbringen des Akkupacks an der Handwerkzeugmaschine, die Kontaktelemente und der Ausgabeport gleichzeitig mit geräteseitigen Gegenkontakten und Anschlussmitteln verbunden werden.

In den Zeichnungen ist die Erfindung in einem Ausführungsbeispiel dargestellt.

Es zeigen:
- Fig. 1: einen erfindungsgemässen Akkupack im Längsschnittansicht,
- Fig. 2: ein Eintreibgerät in Längsschnittansicht, mit einem in einer Akkuaufnahme befindlichen erfindungsgemässen Akkupack.

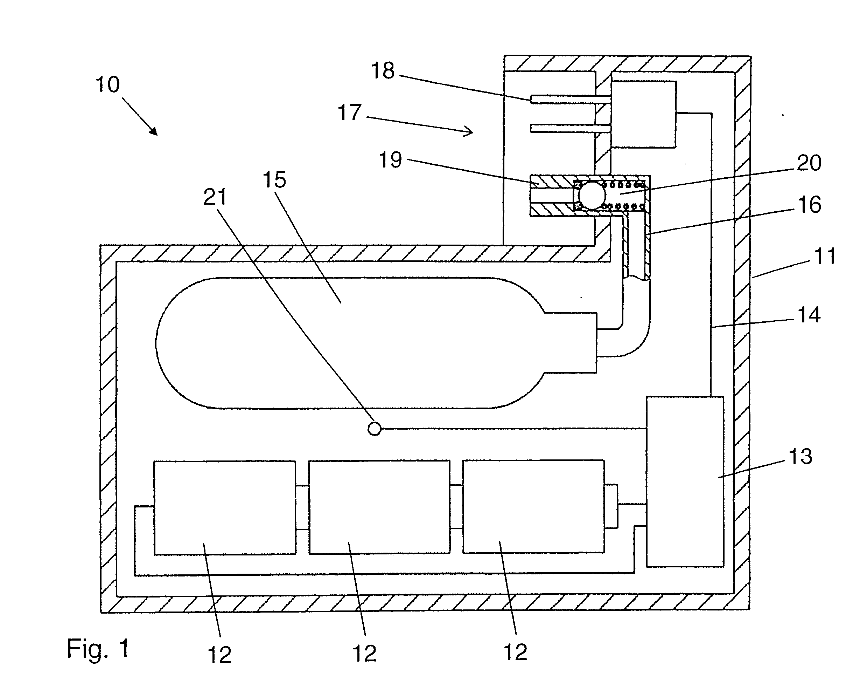

In Fig. 1 ist ein erfindungsgemässer Akkupack 10 dargestellt, der ein Gehäuse 11 und eine Mehrzahl von in dem Gehäuse 11 angeordneten und elektrisch miteinander verknüpften Akkuzellen 12 aufweist. Der Akkupack kann dabei z. B. als Lithium-Titanat-, NiCd-, NiMH-, Li-Ion-, Li-Polymer- oder Li-Fe-Akku ausgebildet sein.

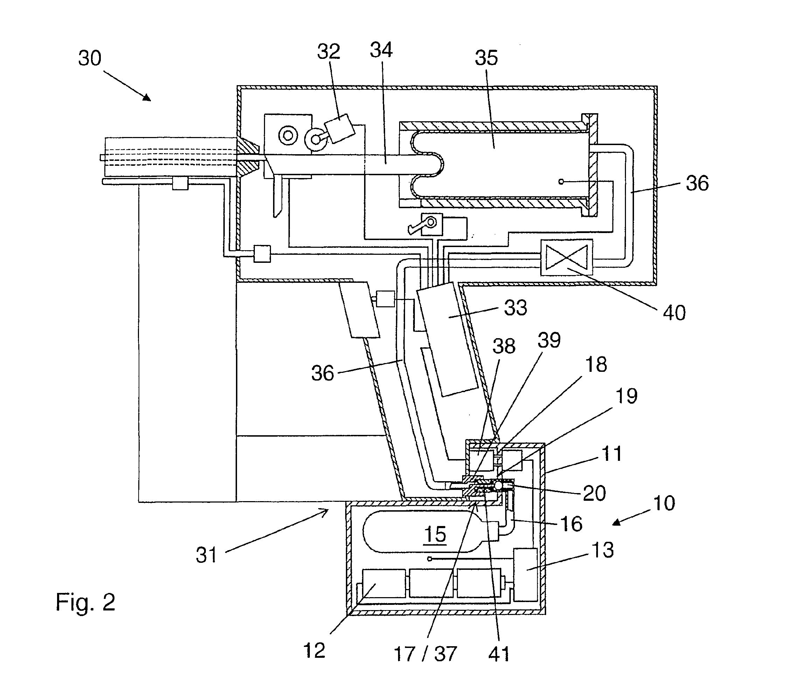

Der Akkupack 10 weist ferner eine als Steuerelektronik ausgebildete Elektronik 13 auf, die elektrisch mit den Akkuzellen 12 verbunden ist und diese überwacht und die über eine elektrische Leitung 14 mit elektrischen Kontaktelementen 18 verbunden ist, die am Gehäuse 11 angeordnet sind. Die Kontaktelemente 18 sind an einem Anschlussport 17 angeordnet, der mit einem Gegenanschlussport 37 einer Handwerkzeugmaschine 30 (siehe Fig. 2), eines Ladegerätes oder ähnlichem verbindbar ist. Die Elektronik 13 ist ferner mit einem Temperatursensor 21, wie z. B. einem NTC (Negative Temperature Coefficient Thermistor), verbunden, wodurch eine Temperaturüberwachung der Akkuzellen 12 ermöglicht wird.

In dem Gehäuse 11 des Akkupacks 10 ist ferner noch ein als Druckbehälter ausgebildetes Gasreservoir 15 für ein unter Druck stehendes gasförmiges Medium, wie z. B. Pressluft, angeordnet. Das Gasreservoir 15 steht dabei über eine Druckleitung 16 in Verbindung mit einem Ausgabeport 19, der benachbart zu den Kontaktelementen 18 am Anschlussport 17 aussen am Gehäuse 11 angeordnet ist. In der Druckleitung 16 ist nahe dem Ausgabeport 19 noch ein Ventil 20 angeordnet, welches unbetätigt ein Ausströmen von Gas bzw. gasförmigen Medium aus dem Gasreservoir 15 verhindert.

In Fig. 2 ist der Akkupack 10 an einer als elektrischem Eintreibgerät ausgebildeten Handwerkzeugmaschine 30 festgelegt. Die Handwerkzeugmaschine 30 weist elektrische Verbraucher, wie z. B. einen elektrischen Antriebsmotor 32 und eine Steuerelektronik 33 auf. Ferner weist die Handwerkzeugmaschine noch eine als Gasfeder ausgebildete Einrichtung 35 auf. Der Antriebsmotor 32 ist dazu ausgelegt einen Eintreibstössel 34 von seiner in Figur 2 dargestellten Ausgangsstellung in eine gegen die Gasdruckfeder bzw. die Einrichtung 35 gespannte Stellung zu überführen.

Die Gasfeder/Einrichtung 35 ist über eine Leitung 36, in der ein über die Steuerelektronik 33 regelbares Ventilmittel 40 zwischengeschaltet ist, mit einem Anschlussmittel 39 für den Ausgabeport 19 des Akkupacks 10 pneumatisch verbunden. Das Anschlussmittel 39 ist dabei zusammen mit Gegenkontaktelementen 38 an einem Gegenanschlussport 37 für den Anschlussport 17 des Akkupacks 10 im Bereich einer Aufnahme 31 der Handwerkzeugmaschine 30 für den Akkupack 10 angeordnet. Bei einem Anstecken des Akkupacks 10 an die Aufnahme 31 der Handwerkzeugmaschine 30 werden der Anschlussport 17 mit dem Gegenanschlussport 37 gekuppelt und gleichzeitig sowohl eine elektrische Verbindung zwischen den Kontaktelementen 18 und den Gegenkontaktelementen 38 als wie auch eine pneumatische Verbindung zwischen dem Ausgabeport 19 und dem Anschlussmittel 39 hervorgerufen. Ein als Dorn ausgebildetes Stellelement 41 am Anschlussmittel 39, das nach dem Kuppeln von Ausgabeport 19 und Anschlussmittel 39 in den Ausgabeport hineinragt, bewirkt dabei ein Öffnen des Ventils 20, so dass der Gasfluss nur noch vom gesteuerten Ventilmittel 40 abhängig ist.

## Patentansprüche

1. Akkupack mit einem Gehäuse (11) in dem Akkuzellen (12) angeordnet sind und mit an dem Gehäuse (11) angeordneten elektrischen Kontaktelementen (18),
**gekennzeichnet durch**
ein innerhalb des Gehäuses (11) angeordnetes Gasreservoir (15) und ein mit dem Gasreservoir (15) über eine Druckleitung (16) verbundenen Ausgabeport (19) für Gas.

2. Akkupack, nach Anspruch 1, **dadurch gekennzeichnet, dass** die Kontaktelemente (18) und der Ausgabeport (19) an einem gemeinsamen Anschlussport (17) angeordnet sind.

3. Akkupack, nach einem der Ansprüche 1 bis 2, **dadurch gekennzeichnet, dass** eine Elektronik (13) vorgesehen ist, die einen Temperatursensor (31) aufweist.

4. Handwerkzeugmaschine mit wenigstens einem elektrischen Verbraucher, mit einer Aufnahme (31) für einen Akkupack (10), die elektrische Gegenkontaktelemente (38) für Kontaktelemente (18) des Akkupacks (10) aufweist, und mit wenigstens einer Gasfeder (35), die ein unter Druck stehendes Gas verwendet,
**dadurch gekennzeichnet,**
**dass** an der Aufnahme (31) für den Akkupack (10) ein Anschlussmittel (39) für einen Ausgabeport (19) eines Gasreservoirs (15) des Akkupacks (10) angeordnet ist, wobei das Anschlussmittel (39) mit der Gasfeder (35) pneumatisch verbunden ist.

5. Handwerkzeugmaschine nach Anspruch 4, **dadurch gekennzeichnet, dass** die elektrischen Gegenkontaktelemente (38) und das Anschlussmittel (39) an einem gemeinsamen Gegenanschlussport (37) angeordnet sind.

## Claims

1. Battery pack with a casing (11) in which battery cells (12) are arranged and with electrical contact elements (18) arranged on the casing (11),
**characterized by**
a gas reservoir (15) arranged within the casing (11) and a gas discharge port (19) connected to the gas reservoir (15) by a pressure line (16).

2. Battery pack according to Claim 1, **characterized in that** the contact elements (18) and discharge port (19) are arranged at a common connection port (17).

3. Battery pack according to either of Claims 1 and 2, **characterized in that** an electronic package (13) is provided which has a temperature sensor ([2]1).

4. Power tool with at least one electrical consumer, with a holder (31) for a battery pack (10) that has mating electrical contact elements (38) for contact elements (18) of the battery pack (10), and with at least one pneumatic spring (35) which uses gas under pressure,
**characterized in that**
a connection means (39) for a discharge port (19) of a gas reservoir (15) of the battery pack (10) is arranged on the holder (31) for the battery pack (10), the connection means (39) being pneumatically connected to the pneumatic spring (35).

5. Power tool according to Claim 4, **characterized in that** the mating electrical contact elements (38) and the connection means (39) are arranged on a common mating connection port (37).

## Revendications

1. Bloc d'accumulateurs comportant un boîtier (11) dans lequel sont agencés des éléments d'accumulateurs (12), et des éléments de contact électrique (18) agencés sur le boîtier (11),
**caractérisé par**
un réservoir de gaz (15) agencé à l'intérieur du boîtier (11) et un orifice de sortie (19) pour du gaz relié au réservoir de gaz (15) par l'intermédiaire d'une conduite sous pression (16).

2. Bloc d'accumulateurs selon la revendication 1, **caractérisé en ce que** les éléments de contact (18) et l'orifice de sortie (19) sont agencés sur un orifice de raccordement commun (17).

3. Bloc d'accumulateurs selon l'une quelconque des revendications 1 à 2, **caractérisé en ce qu'**est prévue une unité électronique (13) incluant un capteur de température (31).

4. Outil à main comportant au moins un consommateur électrique avec un berceau de support (31) pour un bloc d'accumulateurs (10), lequel berceau de support inclut des éléments de contact électrique complémentaires (38) pour des éléments de contact (18) du bloc d'accumulateurs (10), et comportant au moins un ressort à gaz (35) utilisant un gaz mis sous pression,
**caractérisé en ce que**
sur le berceau de support (31) du bloc d'accumulateurs (10) est agencé un raccord (39) pour un orifice de sortie (19) d'un réservoir de gaz (15) du bloc d'accumulateurs (10), le raccord (39) étant pneumatiquement raccordé au ressort à gaz (35).

5. Outil à main selon la revendication 4, **caractérisé en ce que** les éléments de contact électrique complémentaires (38) et le raccord (39) sont agencés sur un orifice de raccordement complémentaire commun (37).
